# EUROPEAN PATENT APPLICATION

(11) **EP 1 707 795 A1**
(43) Date of publication of application: **04.10.2006**
(21) Application number: 04808096.4
(22) Date of filing: 24.12.2004
(51) Int. Cl.: F02M 59/44, F02M 37/00, F02M 59/46, F16K 17/04

(54) **FUEL SUPPLY DEVICE**

(30) Priority: 26.12.2003 JP 2003432549
(71) Applicant: Bosch Corporation, Shibuya-ku Tokyo 150-8360 (JP)
(72) Inventor: AOKI, N., c/o Bosch Automotive Systems Corp., Higashimatsuyama-shi, Saitama 355-8603 (JP); ARAKI, T., c/o Bosch Automotive Systems Corp., Higashimatsuyama-shi, Saitama 355-8603 (JP)
(74) Representative: Schwabe, Hans-Georg
(86) International application number: PCT/JP2004/019746
(87) International publication number: WO 2005/064147

(57) **Abstract**

A fuel control device (11) which is provided on a fuel outlet side of a low-pressure pump (3) for controlling a fuel supply pressure from the low-pressure pump (3) to a predetermined pressure includes a pressure control valve (50) for controlling a fuel pressure of the fuel outlet side and a fuel takeout valve (60). The fuel takeout valve (60) has a valve opening pressure which is smaller than a valve opening pressure of the pressure control valve (50), a drain port (50C) of the pressure control valve (50) and a drain port (61C) of the fuel takeout vale (60) are connected to a fuel low-pressure side by way of a drain pipe (13), and back pressures of pistons (52), (62) are maintained at a fuel-low-pressure-side pressure of the low-pressure pump (3).

## Description

### Technical Field

The present invention relates to a fuel supply device for supplying fuel to an internal combustion engine.

### Background Art

As a fuel supply device for supplying fuel to an internal combustion engine, recently, a common rail-type fuel supply device has been practically used. The common rail-type fuel supply device is constituted as follows. The fuel in the inside of a fuel tank is pumped up by a low-pressure fuel pump such as a feed pump, the fuel is pressurized to a high pressure by a high-pressure fuel pump and is accumulated in the inside of a common rail, and the high-pressurized fuel in the inside of the common rail is injected and supplied to the inside of a cylinder of an internal combustion engine using a fuel injection valve.

The high-pressure fuel pump which serves for such a purpose has a driving shaft which is driven by the internal combustion engine, and the driving shaft is driven with a large power of the internal combustion engine thus pressurizing the fuel to a high pressure. To ensure a smooth operation of the high-pressure fuel pump, there has been known a fuel supply device having the following constitution. In a low-pressure fuel pump for a common rail system, there is provided a fuel chamber pressure regulating valve which includes a passage which takes the fuel used as a lubricant for operation of a high-pressure-system fuel pump therein. This fuel chamber pressure regulating valve is also allowed to function as a pressure control valve which maintains a proper fuel chamber pressure. Due to such a constitution, at the time of starting the engine, the supply of fuel to a lubricant line is prevented until the pressure which is sufficient for the fuel injection is generated in the fuel chamber thus ensuring the favorable starting property (JP-A-2002-322968).

However, according to this known fuel supply device, when the pressure of a lubricant line is elevated due to some reasons, a back pressure is applied to a piston of the fuel chamber pressure regulating valve and hence, the movement of the piston is interrupted whereby a fuel pressure control operation is not performed as expected thus giving rise to a drawback that the pressure of the fuel which is supplied to the high-pressure fuel pump becomes excessively large.

It is an object of the present invention to provide a fuel supply device which can overcome the above-mentioned drawbacks of the related art.

It is another object of the present invention to provide a fuel supply device which can perform a fuel pressure control operation without troubles even when a back pressure is applied to a lubricant line.

### Disclosure of the Invention

According to the present invention, there is provided a fuel supply device which includes a pump which supplies a supply fuel under pressure and a fuel pressure control valve which is provided on a fuel outlet side of the pump for controlling a fuel supply pressure from the pump to a predetermined pressure, wherein the fuel supply device further includes a fuel takeout valve which has a valve opening pressure smaller than a valve opening pressure of the fuel pressure control valve for obtaining fuel for lubrication on the fuel outlet side, and a back pressure of a valve piston of at least the fuel pressure control valve is maintained at a fuel-low-pressure-side pressure of the pump.

According to the present invention, there is also provided a fuel supply device which includes a pump which supplies a supply fuel under pressure and a fuel pressure control valve which is provided on a fuel outlet side of the pump for controlling a fuel supply pressure from the pump to a predetermined pressure, wherein the fuel supply device further includes a fuel takeout valve which has a valve opening pressure smaller than a valve opening pressure of the fuel pressure control valve for obtaining fuel for lubrication on the fuel outlet side, and back pressures of respective valve pistons of the fuel takeout valve and the fuel pressure control valve are maintained at a fuel-low-pressure-side pressure of the pump.

According to the present invention, it is possible to take out the fuel for lubrication without disturbing a pressure controlling operation of the fuel supplied from the pump.

### Brief Description of the Drawings

Fig. 1 is a constitutional view showing an embodiment of a fuel supply device according to the present invention.
Fig. 2 is a cross-sectional view of a fuel controlling device shown in Fig. 1.
Fig. 3 is a cross-sectional view which shows another embodiment of the fuel regulating device shown in Fig. 1.

### Best mode for carrying out the Invention

The present invention is explained more specifically in conjunction with attached drawings.

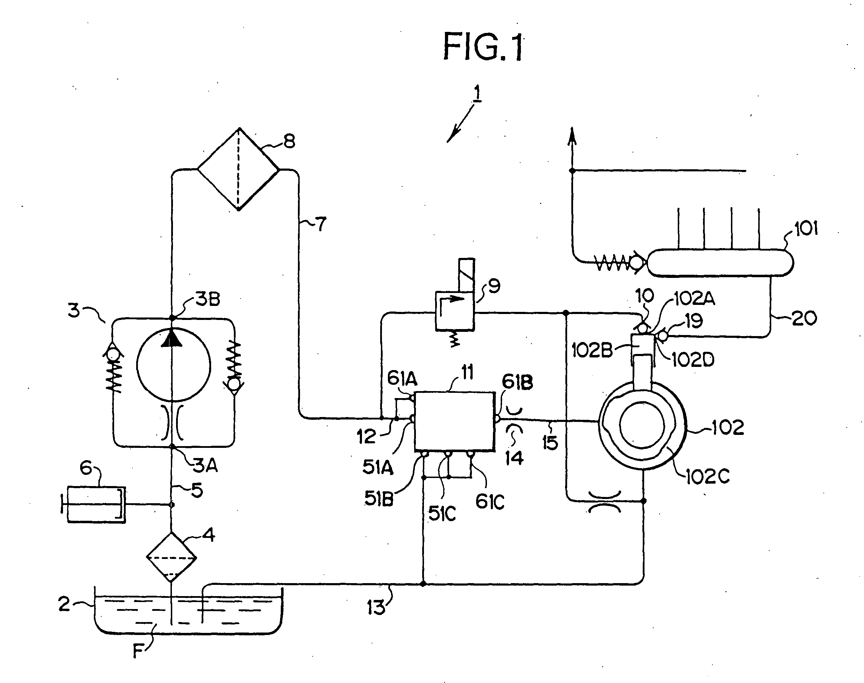

Fig. 1 is a constitutional view showing an embodiment of a fuel supply device according to the present invention. In a fuel supply device 1, numeral 101 indicates a common rail, numeral 102 indicates a high-pressure pump which supplies a high pressure fuel to the common rail 101. Fuel F in the inside of a fuel tank 2 is pressurized by a low-pressure pump 3, and the pressurized fuel is supplied to the high-pressure pump 102 as described later.

A fuel supply passage 5 having a filter 4 is provided between a fuel inlet-side port 3A of the low-pressure pump 3 and the fuel tank 2 and hence, fuel from which dust and the like are removed by the filter 4 passes through the fuel supply passage 5 and is supplied to the low-pressure pump 3. Numeral 6 indicates a manual pump which is used for manually feeding the fuel into the low-pressure pump 3 when air enters a low pressure system line by exchanging a filter or the like.

A fuel supply passage 7 for feeding the low pressure fuel supplied from the low-pressure pump 3 to a high-pressure pump 102 is provided between an outlet port 3B on a fuel outlet side of the low-pressure pump 3 and an inlet port 102A of the high-pressure pump 102. Here, in the fuel supply passage 7, a filter 8 for removing dust contained in the fuel which is fed from the low-pressure pump 3 and a control valve 9 for controlling a flow rate of the low-pressure fuel supplied to the high-pressure pump 102 which is constituted using a proportional solenoid valve are provided. The low-pressure fuel whose flow rate is controlled by the control valve 9 is supplied from the inlet port 102A of the high-pressure pump 102 to the inside of a cylinder chamber 102B by way of a check valve 10. The control valve 9 is controlled by a control unit not shown in the drawings, and the flow rate of the low-pressure fuel is controlled so as to allow a rail pressure in the inside of the common rail 101 to become a predetermined target rail pressure.

For maintaining the pressure of the low-pressure fuel on the fuel inlet side of the control valve 9 to a predetermined value, a fuel regulating device 11 is connected to the fuel supply passage 7. In the fuel supply device 1 shown in Fig. 1, to the fuel supply passage 7 between the filter 8 and the control valve 9, pressure receiving ports 51A, 61A of the fuel regulating device 11 are connected by way of a pipe 12. The fuel regulating device 11 is configured to be operated such that when the pressure of the low-pressure fuel at the pressure receiving port 51A exceeds a predetermined level, the low-pressure fuel is made to overflow from the overflow port 51B and hence, the pressure of the low-pressure fuel at the inlet side of the control valve 9 is maintained at an approximately predetermined fixed pressure. The overflow low-pressure fuel from the overflow port 51B is made to return to the inside of the fuel tank 2 through a drain pipe 13.

The fuel regulating device 11 further includes a takeout port 61B for taking out the fuel supplied to the pressure receiving port 61A from the low-pressure pump 3 as a lubricant,
wherein the fuel which is taken out from the takeout port 61B is supplied to the inside of a cam chamber 102C of a high-pressure pump 102 through a lubricant line 15 which is provided with on orifice means 14 having a suitable constitution, and the fuel is used as a lubricant for the high-pressure pump 102. Here, numerals 51C, 61C indicate drain ports.

As has been explained above, the low-pressure fuel which is controlled to the predetermined pressure by the fuel supply device 1 has a flow rate thereof controlled and is supplied to the high-pressure pump 102. Then, the high-pressure fuel which is produced by being pressurized in the inside of the cylinder chamber 102B is supplied to the common rail 101 from a discharge port 102D of the high-pressure pump 102 by way of a check valve 19 and a high pressure pipe 20.

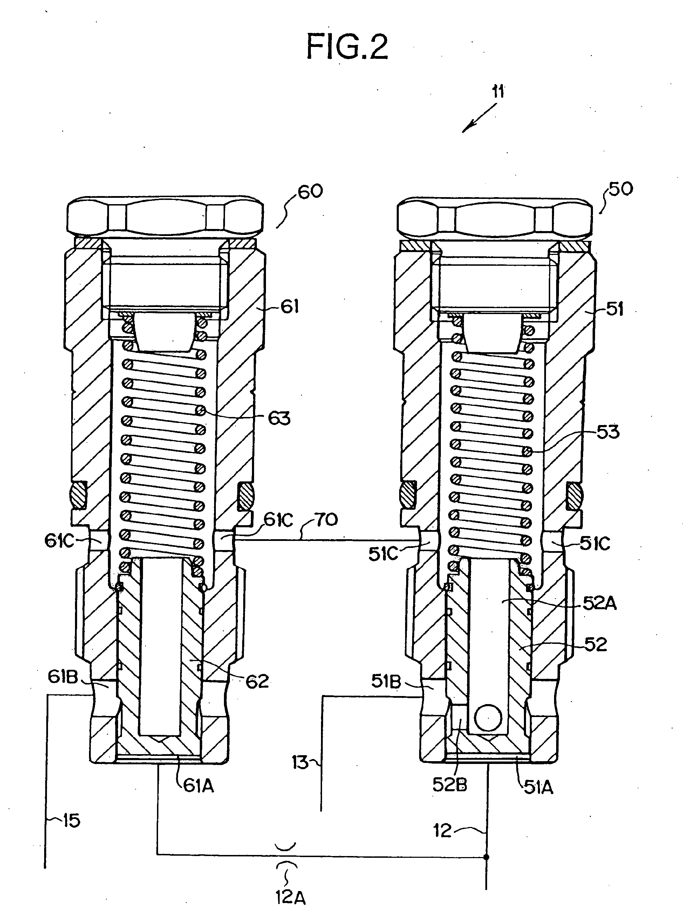

Fig. 2 is a cross-sectional view of the fuel control device 11 shown in Fig. 1. The fuel control device 11 uses two sets of cylinders and pistons and is configured to be capable of performing the control of the fuel pressure on the fuel inlet side of the control valve 9 and the takeout of the fuel to the lubricant line 15.

In Fig. 2, numeral 50 indicates a pressure control valve for controlling the fuel pressure on the fuel inlet side of the control valve 9. In the pressure control valve 50, a valve piston 52 is slidably housed in the inside of a cylinder 51, and the valve piston 52 is resiliently biased toward the pressure receiving port 51A of the cylinder 51 by means of a resilient biasing mechanism 53. Here, although the resilient biasing mechanism 53 is constituted of a coil spring, the resilient biasing mechanism 53 is not limited to the coil spring and may use other known proper member. In a side wall portion of the cylinder 51, an overflow port 51B which is opened or closed by the valve piston 52 is formed. When the valve piston 52 opens the overflow port 51B in response to the fuel pressure in the inside of the pipe 12 which is connected to the pressure receiving port 51A, the fuel in the pipe 12 is released to the drain pipe 13 by way of the overflow port 51B and hence, an operation to maintain the fuel pressure on the fuel inlet side of the control valve 9 at a predetermined pressure is performed.

That is, when the fuel pressure at the pressure receiving port 51A exceeds a predetermined value, the overflow port 51B which is closed by an outer peripheral surface of the valve piston 52 is released and hence, the fuel from the pipe 12 is released to the drain pipe 13 thus lowering the fuel pressure at the pressure receiving port 51A. When the fuel pressure at the pressure receiving port 51A is lowered in this manner, the overflow port 51B is again closed by the outer peripheral surface of the valve piston 52 and the fuel pressure is elevated. In this manner, the valve piston 52 is positioned in response to the fuel pressure at the pressure receiving port 51A and opens or closes the overflow port 51B so as to maintain the fuel pressure at the pressure receiving port 51A at the predetermined level.

The valve piston 52 of the pressure control valve 50 is formed of a hollow body which has a rear end (resilient-biasing-mechanism-53 side) thereof opened. A communication hole 52B which allows the overflow port 51B to be communicated with a hollow portion 52A of the valve piston 52 when the fuel pressure at the pressure receiving port 51A is substantially zero is formed in the valve piston 52.

On the other hand, a drain port 51C for eliminating a back pressure of the valve piston 52 is formed in the cylinder 51. When the overflow port 51B is communicated with the hollow portion 52A by way of the communication hole 52B, a drain port 51C and the overflow port 51B are communicated with each other.

Numeral 60 indicates a fuel takeout valve which can take out the fuel for lubrication from the lubricant line 15. In the fuel takeout valve 60, a valve piston 62 is slidably housed in the inside of a cylinder 61, and the valve piston 62 is resiliently biased toward the pressure receiving port 61A of the cylinder 61 by means of a resilient biasing mechanism 63. The valve piston 62 also has a rear end (resilient-biasing-mechanism-63-side) thereof opened. Here, although the resilient biasing mechanism 63 is constituted of a coil spring, the resilient biasing mechanism 63 is not limited to the coil spring and may use other known proper member. In a side wall portion of the cylinder 61, a takeout port 61B for taking out fuel which is opened or closed by the valve piston 62 is formed. The fuel in the inside of the pipe 12 which is connected to the pressure receiving port 61A is introduced into the inside of the valve piston 62 by way of an orifice 12A. When the valve piston 62 is operated in response to the pressure of the introduced fuel and opens the takeout port 61B, a portion of the fuel in the inside of the pipe 12 is supplied to the lubricant line 15 and hence, the fuel is supplied to the lubricant line 15 as a lubricant.

A drain port 61C which eliminates a back pressure on the valve piston 62 is formed in the cylinder 61, and the drain port 61C is connected with the drain port 51C of the pressure control valve 50 by way of the communication passage 70. Since the drain port 51C is communicated with the drain pipe 13 by way of the communication hole 52B and the port 51B, the pressures on the back surfaces of the valve piston 52 and the valve piston 62 are always set approximately equal to the pressure in the inside of the fuel tank 2 which constitutes a fuel low-pressure portion. As a result, both of valve pistons 52, 62 are configured to be smoothly operated in response to the fuel pressures at the corresponding pressure receiving ports 51A, 61A.

A resilient force of the resilient biasing mechanism 63 of the fuel takeout valve 60 is set to a small value compared to a resilient force of the resilient biasing mechanism 53 of the pressure control valve 50 and hence, when the pressure of the pressure receiving port 61A reaches the fuel pressure necessary for starting, the takeout port 61B is opened and the fuel is supplied to the lubricant line 15 from the pipe 12 as the lubricant.

Since the fuel control device 11 is constituted as described above, while the desired pressure control operation is performed by the pressure control valve 50, the supply of lubricant is performed by the fuel takeout valve 60 independently from the pressure control operation and hence, even when the pressure elevation arises in the lubricant line 15, for example, it is possible to surely perform the desired fuel pressure control operation using the pressure control valve 50 without being influenced by the pressure elevation.

Since the fuel control device 11 is operated in the above-mentioned manner, even when the pressure elevation arises in the lubricant line 15 due to some reasons, the operation of the valve piston 52 for controlling the fuel pressure at the pressure receiving port 51A is not influenced at all. As a result, it is possible to take out the fuel for lubrication from the pipe 12 without causing troubles in the pressure control operation of the fuel supplied from the low-pressure pump 3 by the pressure control valve 50. That is, even when the back pressure is generated in the lubricant line 15, it is possible to realize a stable flow rate control in the control valve 9 without generating a change in the pressure control characteristic of the fuel pressure on the fuel inlet side of the control valve 9.

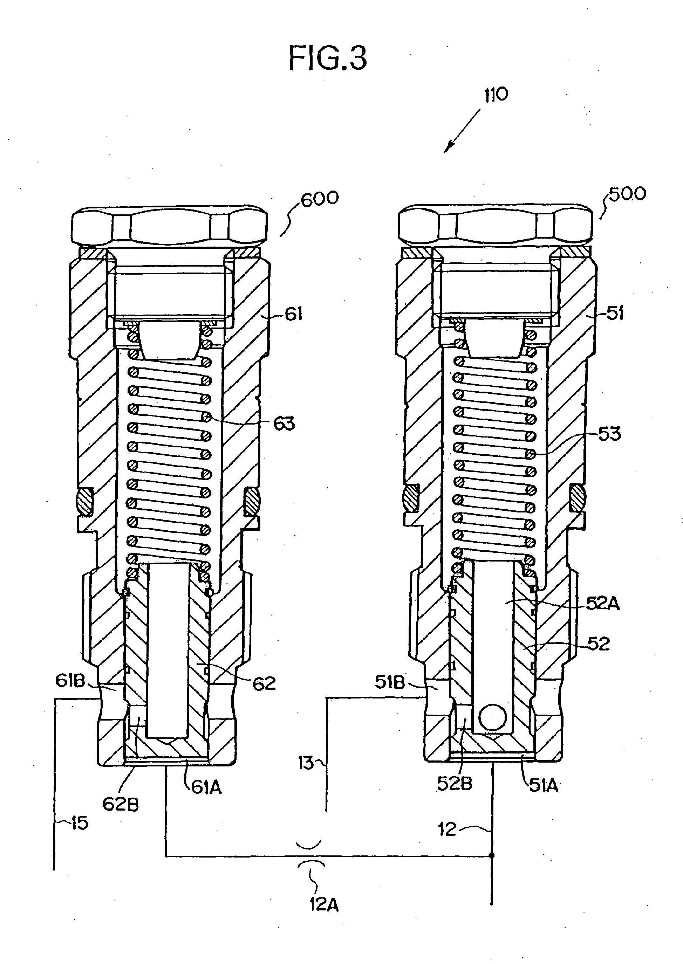

Fig. 3 is a cross-sectional view showing another embodiment of the fuel control device 11 shown in Fig. 1. A fuel control valve 110 shown in Fig. 3 includes a pressure control valve 500 and a fuel takeout valve 600. The pressure control valve 500 differs from the pressure control valve 50 shown in Fig. 2 only with respect to a point that the drain port 51C is not provided to the pressure control valve 500. On the other hand, the fuel takeout valve 600 differs from the fuel takeout valve 60 shown in Fig. 2 only with respect to a point that the communication hole 62B is formed in the valve piston 62 in place of the drain port 61C. Accordingly, the constitution shown in Fig. 3 is not provided with the communication passage 70. Here, with respect to respective parts in Fig. 3, the parts corresponding to the parts shown in Fig. 2 are given equal numerals and their explanation is omitted.

According to the constitution shown in Fig. 3, only the communication hole 52B formed in the valve piston 52 of the pressure control valve 500 is connected with the drain pipe 13 and hence, the back pressure of the pressure control valve 500 is maintained at the fuel-low-pressure-side pressure. On the other hand, the back pressure of the fuel takeout valve 600 is released to a cam chamber 102C of the high-pressure pump 102 by way of the communication hole 62B and hence, the back pressure becomes equal to the pump chamber pressure of the high-pressure pump 102. Since the fuel takeout valve 600 is a valve which supplies the lubrication fuel to the cam chamber 102C, even when the back pressure is equal to the pressure inside the pump chamber, provided that the supply pressure is applied to the pressure receiving port 61A so as to open the fuel takeout valve 600, there arises no functional problems. In other words, at least there is no possibility that the back pressure of pressure control valve 500 is influenced by the pressure of the pump chamber.

### Industrial Applicability

As has been explained heretofore, the fuel supply device according to the present invention can take out the fuel for lubrication without causing troubles in the pressure control operation of the supplied fuel thus contributing to the enhancement of the fuel supply device.

## Claims

1. A fuel supply device comprising a pump which supplies a supply fuel under pressure and a fuel pressure control valve which is provided on a fuel outlet side of the pump for controlling a fuel supply pressure from the pump to a predetermined pressure, wherein the fuel supply device further includes a fuel takeout valve which has a valve opening pressure smaller than a valve opening pressure of the fuel pressure control valve for obtaining fuel for lubrication on the fuel outlet side, and a back pressure of a valve piston of at least the fuel pressure control valve is maintained at a fuel-low-pressure-side pressure of the pump.

2. A fuel supply device according to claim 1, wherein the valve piston of the fuel control valve is configured such that the valve piston is slidably housed in the inside of a cylinder and the valve piston is resiliently biased toward a pressure receiving port of the cylinder by a resilient biasing mechanism, fuel from the pump is supplied to the pressure receiving port, and an overflow port which is formed in the cylinder is closed or opened by the valve piston thus performing a fuel pressure control operation.

3. A fuel supply device according to claim 2, wherein the valve piston is formed of a hollow body which has a rear end thereof opened, and through a communication hole which is formed in the valve piston to be communicated with the overflow port, the back pressure of the valve piston is maintained at the fuel-low-pressure-side pressure.

4. A fuel supply device according to claim 2, wherein the valve piston of the fuel takeout valve is configured such that the valve piston is slidably housed in the inside of a cylinder and the valve piston is resiliently biased toward a pressure receiving port of the cylinder by a resilient biasing mechanism, fuel from the pump is supplied to the pressure receiving port, and an overflow port which is formed in the cylinder is closed or opened by the valve piston thus obtaining the fuel for lubrication from the overflow port.

5. A fuel supply device according to claim 4, wherein a drain port which is formed in the cylinder of the fuel control valve and a drain port which is formed in the cylinder of the fuel takeout valve are connected with each other by way of a communication passage thus maintaining a back pressure of the valve piston of the fuel takeout valve at the fuel-low-pressure-side pressure.

6. A fuel supply device comprising a pump which supplies a supply fuel under pressure and a fuel pressure control valve which is provided on a fuel outlet side of the pump for controlling a fuel supply pressure from the pump to a predetermined pressure, wherein the fuel supply device further includes a fuel takeout valve which has a valve opening pressure smaller than a valve opening pressure of the fuel pressure control valve for obtaining fuel for lubrication on the fuel outlet side, and back pressures of respective value pistons of the fuel takeout valve and the fuel control valve are maintained at a fuel-low-pressure-side pressure of the pump.

7. A fuel supply device according to claim 6, wherein the valve piston of the fuel control valve is configured such that the valve piston is slidably housed in the inside of a cylinder and the valve piston is resiliently biased toward a pressure receiving port of the cylinder by a resilient biasing mechanism, fuel from the pump is supplied to the pressure receiving port, and an overflow port which is formed in the cylinder is closed or opened by the valve piston thus performing a fuel pressure control operation.

8. A fuel supply device according to claim 7, wherein the valve piston is formed of a hollow body which has a rear end thereof opened, and through a communication hole which is formed in the valve piston to be communicated with the overflow port, the back pressure of the valve piston is maintained at the fuel-low-pressure-side pressure.

9. A fuel supply device according to claim 7, wherein the valve piston of the fuel takeout valve is configured such that the valve piston is slidably housed in the inside of a cylinder and the valve piston is resiliently biased toward a pressure receiving port of the cylinder by a resilient biasing mechanism, fuel from the pump is supplied to the pressure receiving port, and an overflow port which is formed in the cylinder is closed or opened by the valve piston thus obtaining the fuel for lubrication from the overflow port.
